# EUROPEAN PATENT APPLICATION

(11) **EP 3 495 557 A1**
(43) Date of publication of application: **12.06.2019**
(21) Application number: 18161112.0
(22) Date of filing: 09.03.2018
(51) Int. Cl.: E01C 13/08, E01C 13/02

(54) **AN ARTIFICIAL TURF SYSTEM INCLUDING AN OLD TURF AS UNDERLAYER**

(30) Priority: 07.12.2017 US 201762595763 P
(71) Applicant: Advanced Polymer Technology Corp., Harmony, PA 16037 (US)
(72) Inventor: BROWN, Kris, Dalton, GA Georgia 30721 (US)
(74) Representative: Richardt Patentanwälte PartG mbB

(57) **Abstract**

The invention relates to an artificial turf system (160), comprising an existing artificial turf (112), an elastic layer (106) and a new artificial turf (120). The existing artificial turf (112) comprises a plurality of existing artificial turf fibres (107) and existing infill granules (105). The existing infill granules lie between the existing artificial turf fibers and form an existing infill layer (110) on top of a carrier structure (108). The elastic layer (106) is formed by a hardened binder. At least a lower portion of the elastic layer overlaps with and penetrates at least an upper portion of the existing infill layer. The new artificial turf (120) comprises a plurality of new artificial turf fibres (109).

## Description

### RELATED REFERENCES

This application is related to international patent application number PCT/EP2015/058237, filed April 16, 2015, which is incorporated herein by reference.

### FIELD OF THE INVENTION

Certain embodiments of the invention relate to the field of artificial turf systems and methods of manufacture. More specifically, certain embodiments of the invention relate to an artificial turf system including an elastic layer, and methods of utilizing exiting artificial turfs in the manufacture therein.

### BACKGROUND OF THE INVENTION

Artificial turf or artificial grass is surface that is made up of fibres which is used to replace grass. The structure of the artificial turf is designed such that the artificial turf has an appearance which resembles grass. Typically, artificial turf is used as a surface for sports such as soccer, American football, rugby, tennis, golf, for playing fields, or exercise fields. Furthermore, artificial turf is frequently used for landscaping applications. An advantage of using artificial turf is that it eliminates the need to care for a grass playing or landscaping surface, like regular mowing, scarifying, fertilizing and watering. For example, watering can be difficult due to regional restrictions for water usage. In other climatic zones the re-growing of grass and re-formation of a closed grass cover is slow compared to the rate of damaging the natural grass surface by playing and/or exercising on the field.

Although artificial turf fields do not require similar attention and effort to be maintained, they typically exhibit wear after a usage time of 5-15 years. Mechanical damage from use and exposure to UV radiation, thermal cycling, interactions with chemicals and various environmental conditions generate wear on artificial turf. Hence, large amounts of worn-out artificial turf must be disposed of every year, which is economically and environmentally undesirable.

US patent 9011740 B2 describes a method for recycling synthetic turf that includes agglomerating a plurality of synthetic turf fragments and extruding the agglomerated material. The method produces a recycled material suitable for use as infill in a synthetic turf.

US20130280445 A1 describes a system and method for recycling and repurposing a synthetic turf field cover including a pre-existing mixture of rubber and sand particles embedded in the turf material.

### BRIEF SUMMARY OF THE INVENTION

Various embodiments provide a method for manufacturing an artificial turf system and an artificial turf system as described by the subject matter of the independent claims. Advantageous embodiments are described in the dependent claims. Embodiments of the present invention can be freely combined with each other if they are not mutually exclusive.

In one aspect, the invention relates to an artificial turf system, comprising an existing artificial turf, an elastic layer and a new artificial turf. The existing artificial turf comprises a plurality of existing artificial turf fibres and existing infill granules. The existing artificial turf fibers are integrated in an existing carrier structure. The existing infill granules lie between the existing artificial turf fibers and form an existing infill layer on top of the carrier structure. The elastic layer is formed by a hardened binder, wherein at least a lower portion of the elastic layer overlaps with and penetrates at least an upper portion of the existing infill layer. The new artificial turf comprises a plurality of new artificial turf fibres and is an overlay layer of the elastic layer.

In another aspect, the invention relates to a method for manufacturing an artificial turf system, comprising applying a liquid binder on an infill layer of on an existing artificial turf, the existing artificial turf comprising a plurality of existing artificial turf fibres integrated in an existing carrier structure, the existing infill layer comprising infill granules lying between the existing artificial turf fibers; letting the liquid infill penetrate at least an upper portion of the existing infill layer and harden to form an elastic layer; and placing a new artificial turf comprising a plurality of new artificial turf fibres on top of the elastic layer.

### BRIEF DESCRIPTION OF SEVERAL VIEWS OF THE DRAWINGS

The following embodiments of the invention are explained in greater detail, by way of example only, making reference to the drawings in which:
Fig. 1 is a cross-section of an existing artificial turf according to the prior art;
Fig. 2 is a cross-section of the existing artificial turf illustrated in Fig. 1, having been supplemented with an elastic layer formed by a hardened binder;
Fig. 3a illustrates the process of placing a new artificial turf on top of the existing artificial turf and the elastic layer according to an embodiment of the invention;
Fig. 3b shows an artificial turf system with the existing artificial turf, the elastic layer and the new artificial turf according to an exemplary embodiment of the invention; and
Fig 4 shows a method of manufacturing the artificial turf system illustrated in Fig. 3b, according to a respective embodiment of the invention.

### DETAILED DESCRIPTION OF THE INVENTION

Embodiments of the invention may have the advantage that it may not be necessary to remove an existing, worn-out artificial turf from a use site and transport the worn-out turf to a landfill. It may also not be necessary to remove parts of an existing, worn-out artificial turf, e.g. the infill granules, from a use site and transport the removed parts to a facility capable of recycling or reusing them. For example, the process of collecting, transporting, recycling or cleaning infill and returning the recycled or cleaned infill or other parts of the worn-out artificial turf to the use site may be associated with economic and environmental costs. Thus, contrary to state-of-the art approaches for installing a new artificial turf, no waste is produced, because the old, existing artificial turf is not replaced but rather re-used and no transportation of parts of the old artificial turf to and from a recycling plant may be necessary. This may reduce the costs of installing new artificial turf and may avoid waste and air pollution.

Moreover, embodiments of the invention may allow using a new artificial turf with an infill layer, a backing and/or a pile height whose height is significantly smaller than usual and that may be at least 5%, preferably at least 10% smaller than the height of the infill layer, the height of the backing or the pile height of the existing turf, respectively, because the existing artificial turf may already provide some elasticity to the whole artificial turf system. Thus, production costs may be reduced, because a thinner (and thus typically cheaper) new artificial turf can be used for providing an artificial turf system with a desired degree of elasticity.

Generating an elastic layer from parts of the existing infill and the binder may be particularly advantageous, because a stack of two artificial turf layers may be very elastic and soft and thus may constitute a security risk for the players or may make the players tired. The elastic layer generated by the binder having at least partially penetrated the infill layer of the existing turf may homogeneously distribute mechanical forces imposed e.g. by a ball or by players of a soccer or rugby game. Thus, the rigidity of the elastic binder may ensure that the players are tiring less quickly and may reduce the risk of sprained ankles and knees.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

According to embodiments, the overlapping of at least the lower portion of the elastic layer with at least the upper portion of the existing infill layer is the result of the binder in liquid state penetrating at least the upper portion of the existing infill layer and of the binder hardening after having penetrated at least the upper portion of the existing infill layer.

Applying the binder in liquid state on the infill layer may be advantageous as the liquid PU binder can penetrate at least the upper portions of the infill layer, preferably at least 0.5 cm, more preferably at least 1.5 cm. Depending on the viscosity of the binder and on the tightness of the packaging of the infill granules, the binder may almost completely be soaked into the infill layer or may form an additional layer on top of the infill layer that consists solely of the binder and does not comprise infill granules. The elastic layer as used herein comprises the upper portion of the infill layer into which the binder has penetrated and, optionally, a layer of pure binder on top of the infill layer, if any.

According to embodiments, the binder is a substance that harden by a chemical or physical process and bind fibres, filler and other particles added into it. According to embodiments, the binder is an organic binder, in particular a polyurethane (PU) based binder. For example, a PU binder can comprise a polyol component and isocyanate-terminated (NCO-terminated) component. A drawback of the binder systems based on two-component polyurethane adhesives is the toxicology of free monomeric polyisocyanates which are contained in the binder systems. According to other embodiments, the binder comprises a resin component containing at least one isocyanate-terminated polyurethane prepolymer; and optionally a curing agent. The NCO-terminated PU prepolymers of the resin component obtained by reacting a polyol or a polyol mixture with a stoichiometric excess of polyisocyanate. The polyols used in the preparation of the prepolymer can be any of the polyols conventionally used for the polyurethane synthesis, for example, monomeric polyols, polyester polyols, polyether polyols, polyester-ether polyols, polycarbonate polyols or mixtures of two or more of the above.

According to preferred embodiments, the binder is a one component, solvent free MDI/TDI-based prepolymer with low viscosity. Preferably, the binder has a processing time of at least 10 minutes, preferably at least 20 minutes to allow the liquid binder to penetrate the infill layer. The 1C PU based binder cures under the influence of moisture. According to one embodiment, the liquid binder has a density at 23 °C of 1.06 ± 0.03 g/cm³, and a viscosity at 23 °C of 1600 ± 400 mPas and a cure time at 20 °C and 50 % relative humidity of 16 to 18 hours. The cure time varies with temperature and humidity. High temperature and high humidity will decrease cure time while low temperature and low humidity will increase it. High temperatures will accelerate curing. Preferably, the binder is applied at an air humidity of 40 - 90 % and at an ambient temperature of 8 - 40 °C . An example of a commercially available PU based binder is QUALIPUR 3210

According to embodiments, the artificial turf fibers of the existing and/or of the new artificial turf are made of polyethylene (PE), polypropylene (PP), polyamide (PA) or other types of polyolefine polymers and mixtures thereof. Polyethylene fibers are soft, skin-friendly, and durable. Polypropylene and polyamide fibers are in general stiffer than PE fibers.

According to embodiment, the infill granules of the existing and/or the new artificial turf consist of rubber granules, coated plant fiber granules or sand or a mixture thereof. The rubber granules can be made e.g. of styrene-butadiene rubber (SBR) or sulphur-cured ethylene propylene diene monomer (EPDM) rubber, thermoset rubber, rubber granules made from specially designed thermoplastic elastomers (TPE). In addition, or alternatively, the rubber granules can be rubber-coated granulates manufactured from natural fibers, in particular plant fibers such as burlap fibers, jute fibers, cotton fibers, wool fibers, hemp fibers, polyester fibers, natural fibers, flax fibers, kenaf fibers, nettle fibers, sisal fibers, cocos fibers, and combinations thereof. For instance, European Patent EP 2 206 833 A1 discloses a method for producing a particulate infill material for synthetic-grass structures envisages providing a mass of thermoplastic material with a filler consisting of coconut-based material and subjecting said mass of thermoplastic material with the filler consisting of coconut-based material to granulation so as to obtain the aforesaid particulate infill material. Preferentially, the thermoplastic material is in particulate form, and the coconut-based material is in particulate form (fibrous, ground and/or shredded). The mixture obtained by mixing the thermoplastic material and the coconut-based material is preferentially heated in order to bring about softening of the thermoplastic material with the corresponding formation of a matrix of thermoplastic material that incorporates the coconut-based material as filler. However, the scope of the present invention covers rubber granulates having all known compositions and mixtures of rubber that could be used in existing artificial turf systems.

In particular, the infill granules of the existing artificial turf can be thermoset rubbers. Thermoset rubbers cannot be further reused or reprocessed at the end of their life cycle in processes comprising a heating step. By adding a binder on top of the infill layer made of thermoset rubbers, the disposal of the thermoset rubber granules at the end of the life cycle of the existing artificial turf can be avoided.

According to embodiments, the infill layer of the existing and/or of the new artificial turf comprises sand and further granules made of rubber or plant fibers. The infill layer may be a homogeneous mixture of the sand and the other granules or may be a layered composition comprising e.g. a lower sand layer on top of and adjacent to the upper surface of the carrier structure and a "further granule layer" on top of and adjacent to the upper surface of the sand layer, whereby the sand layer and the "further granule layer" together constitute the infill layer.

According to one exemplary embodiment, the existing artificial turf has a pile height from 50 to 60 mm and an infill layer height from 35 to 50 mm.

According to preferred embodiments exemplary embodiment, the existing artificial turf has a pile height from 40 to 50 mm and an infill layer height from 18 to 30 mm.
According to embodiments, the new artificial turf comprises an elastic backing made of latex or polyurethane. In addition, or alternatively, the existing artificial turf comprises an elastic backing made of latex or polyurethane.

According to embodiments, the backing of the existing artificial turf has a thickness of 0.5-5 mm. Typically, the backing is applied in a factory during the manufacturing of artificial grass for firmly fixing at least portions of the artificial grass fibers (having been tufted, woven or otherwise incorporated in a carrier structure) in the artificial turf. For example, the backing may be a liquid latex or PU mass applied on the back side of the artificial turf such that the liquid wets the U-shaped tuft turns and mechanically fixes the tuft-turns of the artificial fibers or fiber bundles upon hardening of the liquid latex or PU mass.

Increasing the height of the infill layer confers elasticity to the playing surface. Re-using an existing artificial turf allows reducing the height of the infill layer and/or the backing and/or the pile height of the new artificial turf. Reducing the pile height corresponds to using shorter grass fibers. Thus, the overall construction costs may be reduced and the generation of waste may be avoided.

According to embodiments, the new artificial turf comprises a new carrier structure incorporating portions of the new artificial turf fibers and comprises new infill granules lying between the new artificial turf fibers and forming a new infill layer on top of the new carrier structure.

According to embodiments, the new artificial turf is free of an infill layer.

According to alternative embodiments, the new artificial turf comprises an infill layer. The height of the infill layer of the new artificial turf is at least 5% smaller than the height of the infill layer of the existing artificial turf.

According to embodiments, the new artificial turf is free of an elastic backing. This may be beneficial as production costs of the new artificial turf may be reduced and the required elasticity may be provided by the existing artificial turf.

According to alternative embodiments, the new artificial turf comprises an elastic backing incorporating portions of the new artificial turf fibers. The existing artificial turf also comprises an elastic backing incorporating portions of the existing artificial turf fibers. The height of the elastic backing of the new artificial turf is at least 5%, preferably at least 10 %, smaller than the height of the elastic backing of the existing artificial turf.

According to embodiments, the pile height of the new artificial turf is at least 5%, preferably at least 105 smaller than the pile height of the existing artificial turf.

According to embodiments, the pile height of the new artificial turf is at least 15%, or at least 25% or at least 50% of the pile height of the existing artificial turf.

According to embodiments, the height of the backing of the new artificial turf, if any, is at least 15%, or at least 25% or at least 50% of the height of the backing of the existing artificial turf.

According to embodiments, the height of the infill layer of the new artificial turf, if any, is at least 15%, or at least 25% or at least 50% of the height of the infill layer of the existing artificial turf.

According to embodiments, the elastic layer consists or basically consists of the hardened binder and existing infill granules surrounded by the hardened binder. Optionally, the existing infill granules may have been supplemented with additional infill granules and/or sand in order to level the existing infill layer before the binder is applied. Preferably, the amount of the additional infill granules or sand added for leveling the existing infill layer is less than 20%, preferably less than 10%, preferably less than 5% by weight of the (worn-out) existing infill layer of the existing artificial turf.

The expression "the elastic layer basically consist of' as used herein implies that at least 95% by weight of the elastic layer consist of the existing infill granules.

According to embodiments, the artificial turf system is free of a geogrid.

It has been observed that a geogrid may not to be necessary, because an artificial turf system comprising a combination of two artificial turf layers and the elastic layer described herein has been observed to be sufficiently rigid as well as elastic for being used in many types of sports fields and play grounds.

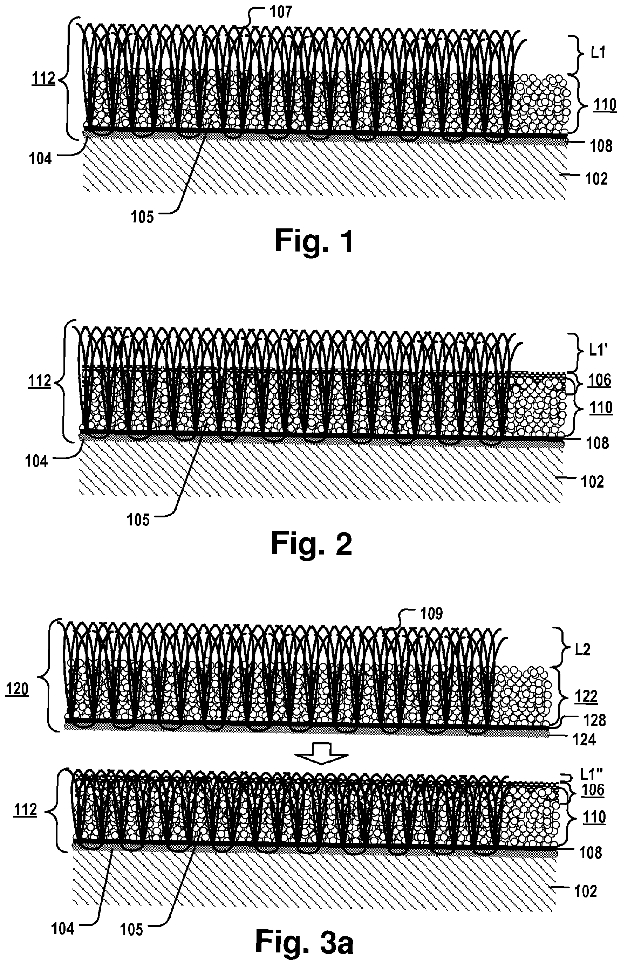

**Fig. 1** is a cross-section of an existing artificial turf 112 according to the prior art having been installed on a base layer 102. For example, the base layer can be made of concrete, soil, sand, clay, wood, stone, or a mixture thereof. Likewise, the base layer 102 can be made of any other types of supporting platforms that could be configured to support the artificial turf 112 for its intended use.

The artificial turf 112 comprises a plurality of existing artificial turf fibres 107. The artificial turf fibers may comprise any combination of intact fibers, partially intact fibers comprising fibers that have been broken or damaged in some manner, and non-intact or missing fibers.

The artificial turf 112 further comprises an existing carrier structure 108 adapted to carry the artificial turf fibers 107. For example, the carrier structure can be a synthetic or natural-fiber-based mesh into which the fibers are bundles of fibers are integrated e.g. by stitching, weaving, tufting, gluing or other methods. It is also possible that the carrier structure 108 is a mesh that is formed by interweaving the artificial turf fibers 107. Thus, interwoven artificial turf fibers can constitute the carrier layer.

In one embodiment, the new artificial turf fibers 107 are arranged in the carrier structure 108, e.g. a textile plane, by means of tufting. Tufting is a type of textile weaving in which an artificial turf fiber (that may be a monofilament or a bundle of multiple monofilaments) is inserted in or through the carrier structure 108. After the inserting is done, first parts of the artificial turf fibers, exposed to a bottom side of the carrier structure 108, are mechanically fixed by the elastic backing 104, second parts of the artificial turf fibers 107 are fixed by the carrier structure 108, and third parts of the artificial turf fibers 110 are exposed to a top side of the carrier structure.

Optionally, the existing artificial turf 112 comprises a backing 104 on the lower side of the carrier structure. The backing 104 may improve the fixing of the fibers in the carrier structure and may provide some elasticity to the existing artificial turf 112. For example, the backing can be a hardened fluid, e.g. a hardened polyurethane or latex mass having been applied in liquid form on the lower side of the artificial turf in a factory of the artificial turf supplier. The fluid, also referred to as an elastic binding composition, may solidify into a film or layer by a drying process or by a chemical reaction resulting in a solidification of the fluid into a solid backing. Such a chemical reaction can be, for example, a polymerization.

The label L1 refers to the length of the portion of the fibers extending from the upper surface of the infill layer 110. L1 may vary from zero to a maximum value dependent upon the condition of the existing artificial turf.

The existing artificial turf 112 can be attached to the existing base 102 by an optional adhesive layer (not shown).

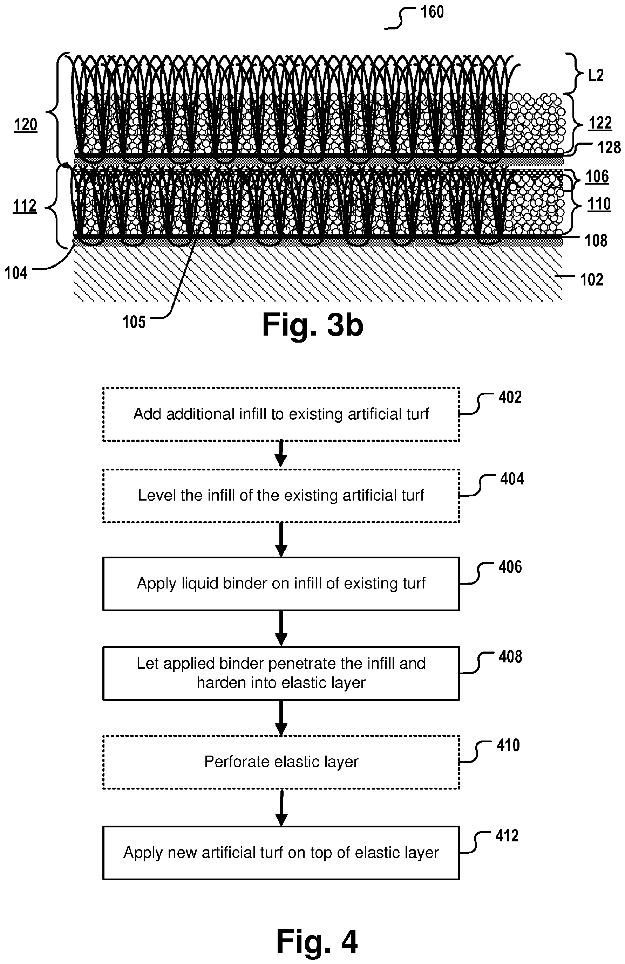

**Fig. 2** is a cross-section of the existing artificial turf illustrated in Fig. 1, having been supplemented with an elastic layer 106 formed by a hardened binder, e.g. a hardened PU mass. As can be seen in figure 2, at least a lower portion of the elastic layer overlaps with and penetrates at least an upper portion of the existing infill layer 110. As described with reference to figure 4, the elastic layer is generated by applying a liquid binder on the existing infill layer and allowing the liquid binder to penetrate the infill layer 110 at least partially before the binder hardens.

In some first embodiments, the liquid binder completely or almost completely penetrates the infill layer but does not reach the carrier structure 108. According to some second embodiments, the liquid binder penetrates the infill layer and can even penetrate the carrier structure in some regions of the artificial turf. In this case, the height of the elastic layer 106 is identical to or greater than the height of the infill layer 110.

According to some third embodiments, the liquid binder penetrates the infill layer only partially, e.g. up to a depth of 0.5 - 3.5 cm, preferably 0.5-2.5 cm of the upper portion of the infill layer. This may have the advantage that the smaller amount of the binder is required for generating the elastic layer 106.

According to some embodiments, the elastic layer 106 may comprise an upper layer that basically consists of the binder having formed a supernatant layer on top of the infill layer 110 when the binder hardened.

Preferably, the height of the elastic layer 106 is at least 0.5 cm, preferably in the range of 0.5-3.5 cm. In general, the larger the height of the elastic layer, the better the distribution of mechanical forces imposed by the players and the structural stability of the artificial turf system formed by a combination of the existing and a new artificial turf and the elastic layer as depicted in figures 3b.

The label L1 depicted in figure 1 refers to the length of the portion of the fibers extending from the upper surface of the infill layer 110 before the binder is applied. The label L1' refers to the length of the portion of the fibers extending from the upper surface of the infill layer 110 after the binder was applied and has hardened. Depending on whether or not the binder completely penetrates the infill layer 110, the length L1' is basically identical to the length L1 (complete penetration) or smaller than the length L1 (if a portion of the binder forms a supernatant layer on top of the infill layer 110).

**Fig. 3a** illustrates the process of placing a new artificial turf 120 on top of the existing artificial turf and the elastic layer 106 according to an embodiment of the invention.

The new artificial turf 120 can comprise an identical or similar structure and/or composition as the existing artificial turf 112. For example, the new artificial turf can comprise a plurality of artificial turf fibers 109 incorporated into a carrier structure 128, e.g. a carrier mesh. Optionally, the new artificial turf can comprise infill granular is forming an infill layer 122. In addition, or alternatively, the new artificial turf can optionally comprise a backing 124, e.g. a latex backing or a PU backing. The backing may be formed by mixing a binding agent, such as liquid polyurethane or latex, with a filler, e.g. chalk.

Preferably, the height of the new artificial turf 120, or at least the height of some of its components, e.g. the backing 124, the fibers 109 (pile height) or the infill layer 122 is at least 5%, preferably at least 10% lower than the height of the existing artificial turf 112 or its respective components, e.g. the backing 104, the fibers 107 or the infill layer 110. Said features may be beneficial as a desired degree of elasticity may be achieved with a comparatively thin (and cheap) new artificial turf as the existing artificial turf already provides a cushioning effect.

When the new artificial turf 120 is placed on top of the hardened elastic layer 106, the portions of the fibers 107 illuminating from the elastic layer 106 are depressed such that the backing of the new artificial turf is in direct contact with the artificial turf fibers 107 and the upper surface of the elastic layer 106. Correspondingly, the height L1" basically becomes "0" when the new artificial turf has been finally installed on top of the elastic layer 106.

**Fig. 3b** shows an artificial turf system 160 with the existing artificial turf 112, the elastic layer 106 and the new artificial turf 120 according to an exemplary embodiment of the invention. The system 160 may comprise perforations (not shown) allowing water to penetrate the system and reach the base layer 102.

The created artificial turf system 160 not only distributes mechanical forces imposed by the players more evenly, but also protects the players from injuries. Thus, embodiments of the invention provide for a "sandwich" structure comprising an elastic layer 106 made from existing infill and a hardened binder that represents a desirable compromise between rigidity and softness. Preferably, embodiments of the system 160 have drainage holes or other means for providing an effective drainage of water. They offer an effective manner of providing for a level playing surface, but also provide for a playing surface that has enough cushion to simulate real grass playing surfaces. In other words, the existing artificial turf 112 and the elastic layer 106 provides an additional cushioning effect in combination with sufficient rigidity to distribute mechanical forces imposed by the players that allows to provide an artificial turf system with desired physical properties without producing waste and without the necessity do de-install the existing artificial turf partially or completely.

Hence, the costs of installing a new artificial turf are typically reduced, as waste is avoided and the new artificial turf can be thinner and have smaller cushioning capabilities as normally required.

The new artificial turf may comprise no or only a thin infill layer. It has been observed that - thanks to the cushioning effect of the existing artificial turf layer, the infill layer of the new artificial turf 120 can be thinner than in state of the art system without increasing the risk of injuries of the players. The magnitude of the cushioning effect provided by the existing artificial turf may depend on the thickness of the existing artificial turf, in particular on the thickness of the infill layer 110 of the exiting turf. In some embodiments, in particular in embodiments where the existing artificial turf is highly elastic and has strong cushioning effects, the new artificial turf is free of any infill, i.e., the infill layer of the new artificial turf has a height of "0".

**Fig 4** shows a method of manufacturing the artificial turf system 160 illustrated in Fig. 3b, according to a respective embodiment of the invention.

In an optional preparatory step 402, additional infill granules, e.g. sand/or rubber granules and/or rubber-coated plant fiber granules are added to the selected regions of the existing artificial turf in order to fill holes and depressions in the existing infill layer 110. The additional infill material can be added manually or by a machine and can be added selectively to those regions in the existing artificial turf where a depression was observed

In a further optional step 404, the infill layer 110 of the existing artificial turf is leveled. For example, a user can use a device, e.g. a scraper, or a machine in order to level the infill layer 110 optionally comprising additional infill granules added in step 402.

The method comprises a step 406 of applying a liquid binder on top of the infill layer 110. The liquid binder should be applied homogeneously on the surface of the infill layer. For example, the liquid binder can be sprayed on top of the infill layer. Optionally, the applied binder can be leveled by a user using a leveling device or machine. The device used in the preferred embodiment of the process disclosed herein is ideally portable. For example, the device can be mounted on a paving machine or other mobile device for use at or near the site of the reinstallation of artificial turf.

Next in step 408, the applied liquid binder is allowed to penetrate into the infill layer 110 at least partially and is allowed to harden. For example, the liquid binder can be allowed to harden for several hours, preferably at least 12 hours. In a further, optional step 410, which may also be executed after the application of the new artificial turf in step 412, the elastic layer is perforated in order to allow water to leave the artificial turf system and reach the base layer 102.

Next in step 412, the new artificial turf 120 as depicted in figures 3a and 3b is installed on top of the elastic layer 106. The new artificial turf is placed on top of the elastic layer such that the new artificial turf forms an overlay layer of the existing layer as depicted in figure 3b.

A "binder" or "binding agent" as used herein is any material or substance that holds or draws other materials together to form a cohesive whole mechanically, chemically, by adhesion or cohesion. According to preferred embodiments, the binder is a one-component (1C) or two-component (2C) polyurethane (PU) reaction mixture that is applied on the infill layer of the existing artificial turf in liquid state.

A "thermoset rubber", also referred to as "thermosetting rubber", is a rubber that is irreversibly cured from a soft solid or viscous liquid prepolymer or resin. The process of curing changes the prepolymer or resin into an infusible, insoluble polymer network, and is induced by the action of heat or suitable radiation often under high pressure, or by mixing with a catalyst. Thermoset resins are usually malleable or liquid prior to curing. Others are solids. Once hardened a thermoset rubber cannot be reheated and melted to be recycled or shaped differently. Thermosetting polymers may be contrasted with thermoplastic polymers, which are commonly shaped into their final product form and can be reshaped at high temperatures.

A "pile height" as used herein is the height of artificial turf fibers measured from the top surface of the carrier structure 108 to the top of the artificial turf 112. Thus, in the artificial turf 112 depicted in figure 1, the pile height of the artificial turf 112 would comprise the height of the infill layer 110 plus the length L1 of the portion of the fibers extending from the upper surface of the infill layer 110 to the top of the artificial turf. The pile height indicates how long the blades of grass are in an artificial turf carpet. There are characteristic pile heights for every sport. Hockey, tennis, korfball, and golf driving mats have short piles (e.g. 9 to 25 mm), for example. Sports like football, rugby, American football, etc., have mats with a longer pile (e.g. 40 to 65 mm). Those sports fields are usually filled with rubber infill and need a longer fibre.

"About" or "approximately" as used herein in connection with a numerical value refers to the numerical value of ± 10%, preferably ± 5%.

### LIST OF REFERENCE NUMERALS

- 102: base layer
- 104: backing
- 105: infill granules
- 106: elastic layer formed by a hardened binder
- 107: artificial turf fibers
- 108: carrier structure
- 109: artificial turf fibers
- 110: infill layer
- 112: existing artificial turf
- 120: new artificial turf
- 122: infill layer
- 124: backing
- 128: carrier structure
- L1, L1', L1": different heights of the parts of the existing artificial turf fibers extending from the infill layer
- L2: height of the parts of the new artificial turf fibers extending from the infill layer
- 402-412: steps

## Claims

1. An artificial turf system (160), comprising:
an existing artificial turf (112) comprising a plurality of existing artificial turf fibres (107) and existing infill granules (105), the existing artificial turf fibers being integrated in an existing carrier structure (108), the existing infill granules lying between the existing artificial turf fibers and forming an existing infill layer (110) on top of the carrier structure;
an elastic layer (106), the elastic layer being formed by a hardened binder, wherein at least a lower portion of the elastic layer overlaps with and penetrates at least an upper portion of the existing infill layer;
a new artificial turf (120) comprising a plurality of new artificial turf fibres (109), the new artificial turf being an overlay layer of the elastic layer.

2. The artificial turf system according to claim 1, wherein the overlapping of at least the lower portion of the elastic layer with at least the upper portion of the existing infill layer is the result of the binder in liquid state penetrating at least the upper portion of the existing infill layer and of the binder hardening after having penetrated at least the upper portion of the existing infill layer.

3. The artificial turf system according to any of the preceding claims,
wherein the new artificial turf comprises an elastic backing (124) made of latex or polyurethane; and/or
wherein the existing artificial turf comprises an elastic backing (104) made of latex or polyurethane.

4. The artificial turf system according to any of the preceding claims, wherein the new artificial turf (120) is free of an infill layer.

5. The artificial turf system according to any of the preceding claims, wherein the new artificial turf (120) comprises an infill layer (122), the height of the infill layer of the new artificial turf being at least 5% smaller than the height of the infill layer (110) of the existing artificial turf.

6. The artificial turf system according to any of the preceding claims, wherein the new artificial turf (120) is a) free of an elastic backing; or b):
wherein the new artificial turf comprises an elastic backing (124) incorporating portions of the new artificial turf fibers; and
wherein the existing artificial turf comprises an elastic backing (104) incorporating portions of the existing artificial turf fibers; and
wherein the height of the elastic backing of the new artificial turf is at least 5% smaller than the height of the elastic backing of the existing artificial turf.

7. The artificial turf system according to any of the preceding claims, wherein the infill granules of the existing infill layer (110) consist of or comprise thermoset rubber granules.

8. The artificial turf system according to any one of the previous claims, wherein the pile height of the new artificial turf is at least 5% smaller than the pile height of the existing artificial turf.

9. The artificial turf system according to any one of the previous claims, wherein the elastic layer basically consists of the hardened binder and existing infill granules surrounded by the hardened binder.

10. A method for manufacturing an artificial turf system (160), comprising:
applying (406) a liquid binder on an infill layer (110) of on an existing artificial turf (112), the existing artificial turf comprising a plurality of existing artificial turf fibres (107) integrated in an existing carrier structure (108), the existing infill layer comprising infill granules (105) lying between the existing artificial turf fibers; and
letting (408) the liquid infill penetrate at least an upper portion of the existing infill layer and harden to form an elastic layer (106);
placing (412) a new artificial turf (120) comprising a plurality of new artificial turf fibres (109) on top of the elastic layer (106).

11. The method of claim 10, further comprising leveling (404) the infill of the infill layer with a levelling device or a levelling machine.

12. The method of claim 10 or 11, further comprising applying (402) additional infill granules to selected regions of the existing artificial turf.

13. The method of any one of claims 10-12, further comprising perforating the hardened elastic layer (106) for creating drainage openings.

14. The method of any one of claims 10-13, the infill granules of the existing infill layer (110) comprising or consisting of thermoset rubber granules.

15. The method of any one of claims 10-14, wherein the new artificial turf (120) is free of an infill layer or comprises an infill layer (122) whose height is at least 5% smaller than the height of the infill layer (110) of the existing artificial turf.

16. The method of any one of claims 10-15,
wherein the new artificial turf comprises an elastic backing (124) incorporating portions of the new artificial turf fibers; and
wherein the existing artificial turf comprises an elastic backing (104) incorporating portions of the existing artificial turf fibers; and
wherein the height of the elastic backing of the new artificial turf is at least 5% smaller than the height of the elastic backing of the existing artificial turf.

17. The method of any one of claims 10-16, wherein the new artificial turf (120) is free of an elastic backing.

18. The method of any one of claims 10-17, wherein the pile height of the new artificial turf is at least 5% smaller than the pile height of the existing artificial turf.

## Amended claims

### Amended claims in accordance with Rule 137(2) EPC.

1. An artificial turf system (160), comprising:
an existing artificial turf (112) comprising a plurality of existing artificial turf fibres (107) and existing infill granules (105), the existing artificial turf fibers being integrated in an existing carrier structure (108), the existing infill granules lying between the existing artificial turf fibers and forming an existing infill layer (110) on top of the carrier structure;
an elastic layer (106), the elastic layer being formed by a hardened binder, wherein at least a lower portion of the elastic layer overlaps with and penetrates at least an upper portion of the existing infill layer;
a new artificial turf (120) comprising a plurality of new artificial turf fibres (109) incorporated into a carrier mesh (128), the new artificial turf being an overlay layer of the elastic layer, wherein the carrier mesh (128) is formed by an interweaving of the new artificial turf fibres (109).

2. The artificial turf system according to claim 1, wherein the overlapping of at least the lower portion of the elastic layer with at least the upper portion of the existing infill layer is the result of the binder in liquid state penetrating at least the upper portion of the existing infill layer to a depth of at least 0.5 cm and of the binder hardening after having penetrated at least the upper portion of the existing infill layer.

3. The artificial turf system according to any of the preceding claims,
wherein the new artificial turf comprises an elastic backing (124) made of latex or polyurethane; and/or
wherein the existing artificial turf comprises an elastic backing (104) made of latex or polyurethane.

4. The artificial turf system according to any of the preceding claims, wherein the new artificial turf (120) is free of an infill layer.

5. The artificial turf system according to any of the preceding claims, wherein the new artificial turf (120) comprises an infill layer (122), the height of the infill layer of the new artificial turf being at least 5% smaller than the height of the infill layer (110) of the existing artificial turf.

6. The artificial turf system according to any of the preceding claims, wherein the new artificial turf (120) is a) free of an elastic backing; or b):
wherein the new artificial turf comprises an elastic backing (124) incorporating portions of the new artificial turf fibers; and
wherein the existing artificial turf comprises an elastic backing (104) incorporating portions of the existing artificial turf fibers; and
wherein the height of the elastic backing of the new artificial turf is at least 5% smaller than the height of the elastic backing of the existing artificial turf.

7. The artificial turf system according to any of the preceding claims, wherein the infill granules of the existing infill layer (110) consist of or comprise thermoset rubber granules.

8. The artificial turf system according to any one of the previous claims, wherein the pile height of the new artificial turf is at least 5% smaller than the pile height of the existing artificial turf.

9. The artificial turf system according to any one of the previous claims, wherein the elastic layer basically consists of the hardened binder and existing infill granules surrounded by the hardened binder.

10. A method for manufacturing an artificial turf system (160), comprising:
applying (406) a liquid binder on an infill layer (110) of on an existing artificial turf (112), the existing artificial turf comprising a plurality of existing artificial turf fibres (107) integrated in an existing carrier structure (108), the existing infill layer comprising infill granules (105) lying between the existing artificial turf fibers; and
letting (408) the liquid infill penetrate at least an upper portion of the existing infill layer and harden to form an elastic layer (106);
placing (412) a new artificial turf (120) comprising a plurality of new artificial turf fibres (109) incorporated into a carrier mesh (128) on top of the elastic layer (106), wherein the carrier mesh (128) is formed by an interweaving of the new artificial turf fibres (109).

11. The method of claim 10, further comprising leveling (404) the infill of the infill layer with a levelling device or a levelling machine.

12. The method of claim 10 or 11, further comprising applying (402) additional infill granules to selected regions of the existing artificial turf.

13. The method of any one of claims 10-12, further comprising perforating the hardened elastic layer (106) for creating drainage openings.

14. The method of any one of claims 10-13, the infill granules of the existing infill layer (110) comprising or consisting of thermoset rubber granules.

15. The method of any one of claims 10-14, wherein the new artificial turf (120) is free of an infill layer or comprises an infill layer (122) whose height is at least 5% smaller than the height of the infill layer (110) of the existing artificial turf.

16. The method of any one of claims 10-15,
wherein the new artificial turf comprises an elastic backing (124) incorporating portions of the new artificial turf fibers; and
wherein the existing artificial turf comprises an elastic backing (104) incorporating portions of the existing artificial turf fibers; and
wherein the height of the elastic backing of the new artificial turf is at least 5% smaller than the height of the elastic backing of the existing artificial turf.

17. The method of any one of claims 10-16, wherein the new artificial turf (120) is free of an elastic backing.

18. The method of any one of claims 10-17, wherein the pile height of the new artificial turf is at least 5% smaller than the pile height of the existing artificial turf.

19. The method of any one of claims 10-18, further comprising letting (408) said liquid infill penetrate to a depth of at least 0.5 cm of said at least said upper portion of said existing infill layer.
